# EUROPEAN PATENT APPLICATION

(11) **EP 4 575 233 A1**
(43) Date of publication of application: **25.06.2025**
(21) Application number: 24166135.4
(22) Date of filing: 26.03.2024
(51) Int. Cl.: F04D 29/056, F04D 29/057, F04D 29/051

(54) **AIR-BEARING AND CENTRIFUGAL REFRIGERATION COMPRESSOR**

(30) Priority: 20.12.2023 CN 202311772565
(71) Applicant: Sino-Brook New Energy Technology (Shanghai) Co., Ltd, Shanghai, Shanghai (CN)
(72) Inventor: WANG, Qianzhen, Shanghai (CN); FENG, Fujin, Shanghai (CN); LIU, Xuesong, Shanghai (CN); ZHOU, Lei, Shanghai (CN)
(74) Representative: Qip Patent & Recht Dr. Kuehn & Partner mbB

(57) **Abstract**

The present invention discloses an air-bearing and a centrifugal refrigeration compressor, wherein the air-bearing comprises two sets of first notch grooves, which are symmetrically arranged at two ends of a rotor, each set of first notch groove includes several radial grooves distributed circumferentially around the rotor, and the radial grooves are curved to form an air film to support the rotor when it rotates. By applying the air-bearing in centrifugal refrigeration compressors, on the one hand, a smaller size rotor can be used in the centrifugal refrigeration compressors, thereby achieve the requirements of smaller size and higher speed of the centrifugal refrigeration compressors, and on the other hand, it is able to reduce the air film gap, reduce the co-frequency and sub-synchronization amplitudes of the rotor, reduce the risk of the impeller rubbing against the shell and meet the demand for a smaller tip clearances.

## Description

### TECHNICAL FIELD

The present invention relates to the field of thermal management technology, and in particular to an air-bearing and a centrifugal refrigeration compressor.

### BACKGROUND

Thermal management refers to the management and control of the temperature of the total system, discrete components, or their environments, with the aim of maintaining the normal operation of each component or improving their performance or lifetime. Currently, thermal management is usually required in fields such as electrochemical energy storage, and the thermal management has a significant impact on the performance, lifetime, and safety of energy storage systems. Due to the strong heat exchange capacity of the liquid-cooled thermal management system, the temperature difference of the battery core can be achieved within 3°C, therefore, the lifetime of the energy storage system can be significantly improved compared to the air-cooled system. In view of this, liquid-cooled systems are mostly used in the field of energy storage at present.

The refrigeration capacity required for energy storage liquid-cooled systems is usually 100kW or less, and in the field of centrifugal refrigeration compressors, when the refrigeration capacity is less than 200kW, in order to pursue high efficiency, it is necessary to increase the speed as much as possible and reduce the tip clearance, therefore, in this high-speed and light-load applications such as energy storage liquid-cooled systems, air-bearings are mostly used.

The existing air-bearings are mostly foil type dynamic pressure air-bearings, which may meet the demand of high speed to a certain extent. However, the foil type dynamic pressure air-bearing requires high consistency of the bearing, and there are many foil components and parts, resulting in a large tolerance range which makes it unable to meet the requirements for smaller tip clearance. In addition, the demand for ultra-high speed requires a further reduction of the dimensions of the rotor, but limited by the manufacturing process of foil bearings, it is usually difficult to meet the demand for high-quality batches below 15mm inner diameter.

In some existing products, there are also solutions using aerostatic bearings, but aerostatic bearings require the introduction of an additional precise air supply system, and the air compressor of the precise air supply system needs to work continuously and is a vulnerable parts, which will additionally increase a lot of usage and maintenance costs.

### SUMMARY

Aiming at some or all of the problems in the prior art, in the first aspect, the present invention proposes an air-bearing, comprising:
First notch grooves, which are arranged at two ends of a rotor, the first notch grooves are circumferentially uniformly distributed around the rotor, and the first notch groove is in a bending shape to form an air film to support the rotor when it rotates.

Furthermore, the bending direction of the first notch grooves is opposite to the rotation direction of the rotor.

Furthermore, the first notch grooves are herringbone grooves.

Furthermore, the depth of the first notch grooves is 8 to 20 micrometers.

Furthermore, the first notch grooves are formed by laser or chemical etching.

Furthermore, the air-bearing further comprises dam areas, which are arranged at two ends of the rotor, and the first notch grooves are arranged on the surface of the dam areas.

Furthermore, the air-bearing further comprises a thrust disc, the thrust disc is arranged at an end of the rotor, and second notch grooves are mirror symmetrically provided respectively on the surface of two sides of the thrust disc to drive gas flow when the rotor rotates, forming a local high-pressure at the center of the thrust disc.

Furthermore, the second notch grooves extend from the center of the thrust disc towards its edge, and the second notch grooves are curvilinear grooves.

Furthermore, the depth of the second notch grooves are 8 to 20 micrometers.

Furthermore, the second notch grooves are formed by laser or chemical etching.

Based on the air-bearing as described above, in the second aspect, the present invention provides a centrifugal refrigeration compressor comprising an air-bearing as described above.

The present invention provides an air-bearing, which forms an air film by way of engraving notch grooves on the surface of the rotor, thus avoiding the limitation of rotor size due to foil production process and etc., and by using air-bearing with notch grooves, rotors with diameters of less than 15mm, even close to 2 to 3mm may be produced, in order to meet the demand of smaller size and higher speed. Because there is no need to produce additional other components and the rotor itself is processed with high precision, a smaller gap can be designed, and after testing, the air film gap of the bearing with notch groove is usually 5 to 20 µm, and although it may vary depending on the size of the rotor, it is generally smaller than the foil type air film gap, and is approximately 1/2 to 1/5 of the foil type air film gap. Therefore, the co-frequency and sub-synchronization amplitudes of the rotor using notch groove air-bearing will be greatly reduced, thus can improving the stability of the rotor system. A smaller air film gap can reduce the risk of impeller rubbing against the shell, thus meeting the demand for a smaller tip clearance. Compared to the manufacturing of foil, which requires multi-step processes such as heat treatment, stamping, and welding, the notch groove processing method only requires laser or electrochemical etching, thus greatly reducing the process steps and shortening the production time. At the same time, the thrust disc also uses the notch groove method, which makes the groove pattern to be directly processed onto the thrust disc, which also reduces parts of two thrust bearing and which reduces the dimensional chain tolerance. Specifically, due to the influence by its own precision, the assembly gap of foil type thrust bearing usually requires about 100 µm on one side. Whereas due to the high precision of the thrust disc, the notch groove bearing can tolerance a smaller assembly gap of usually 20 to 40 µm, which makes the axial runout of the rotor will be smaller, which is helpful for the design of a small tip clearance. Overall, the notch groove air-bearing reduces two radial and thrust foil bearings compared to traditional foil type air-bearing, reduces the number of parts, lowers the costs, and improves the assembly efficiency and precision. In addition, the foil type air-bearing is affected by its structure and gap, and has higher requirements for the installation angle of the compressor, and usually, the radial foil type air-bearing needs to form an air film in the direction of gravity, so the rotor system cannot have a large inclination angle. While the characteristics of a small air film gap and symmetry of the notch groove bearing can meet its installation and usage needs at various angles, thereby meeting the needs of installing compressor in a small space.

### BRIEF DESCRIPTION OF THE DRAWINGS

To further explain the above and other advantages and features of various embodiments of the present invention, a more specific description of various embodiments of the present invention will be provided with reference to the accompanying drawings. It can be appreciated that these accompanying drawings depict only typical embodiments of the present invention, and therefore will not be construed as limiting their scope. In the accompanying drawings, identical or corresponding parts will be indicated by the same or similar reference numerals for the sake of clarity.
FIG.1 illustrates a structural schematic diagram of an air-bearing according to an embodiment of the present invention;
FIG.2 illustrates a structural schematic diagram of assembly aggregate of an air-bearing and a thrust disc according to an embodiment of the present invention, and;
FIG.3 illustrates a structural schematic diagram of a thrust disc according to an embodiment of the present invention.

List of reference numerals of accompanying drawings
001 Rotor
101 First notch grooves
011 First dam area
002 Thrust disc
102 Second notch grooves
021 Second dam area

### DETAILED DESCRIPTION OF EMBODIMENTS

In the following description, the present invention is described with reference to various embodiments. However, those skilled in the art will recognize that various embodiments can be implemented without one or more specific details or with other alternative and/or additional methods, materials, or components. In other situations, well-known structures, materials, or operations are not shown or described in detail so as not to obscure the inventive point of the present invention. Similarly, for the purpose of explanation, specific quantities, materials, and configurations are set forth in order to provide a comprehensive understanding of embodiments of the present invention. However, the present invention is not limited to these particular details. Furthermore, it should be appreciated that the embodiments illustrated in the accompanying drawings are illustrative representations and are not necessarily drawn to the correct scale.

In this specification, a reference to "one embodiment" or "the embodiment" means that particular feature, structure or characteristic described in connection with the embodiment are included in at least one embodiment of the present invention. The phrase "in one embodiment" appearing throughout this description may not necessarily all referring to the same embodiment.

It should be noted that the embodiments of the present invention describe the process steps in a specific order, however this is only for the purpose of illustrating the specific embodiment, rather than limiting the order of the steps. On the contrary, in different embodiments of the present invention, the order of the steps can be modified according to the adjustment of the process.

Aiming at the problem that the manufacturing process of foil bearing will limit the size of the rotor, the present invention provides an air-bearing which forms an air film, when the rotor rotates, by way of engraving notch grooves on the surface of the rotor. For the air-bearing, it is only required to process the grooves on the surface of the rotor after the rotor has been produced, so the size of the rotor can be made according to actual demand, for example, a rotor with a diameter of 2 to 3 millimeters can be used. Moreover, in comparison, the groove process is simple and has fewer steps, and can greatly reduce the complexity of the process and production time.

The technical solution of the present invention will be further described below in conjunction with the accompanying drawings of the embodiments.

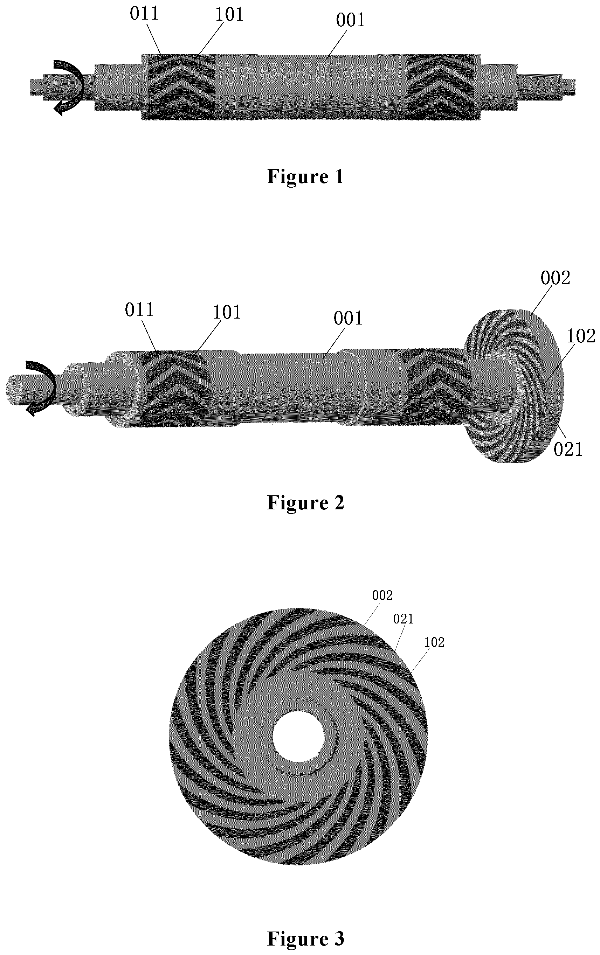

FIG.1 illustrates a structural schematic diagram of an air-bearing according to an embodiment of the present invention. As shown in the FIG.1, an air-bearing comprises first notch grooves 101. The first notch grooves are arranged at two ends of the rotor 001. Specifically, the first notch grooves 101 comprises two sets, and the two sets of the first notch grooves are symmetrically arranged at two ends of the rotor. Wherein each set of the first notch grooves includes several radial grooves, which are circumferentially distributed around the rotor 001. In one embodiment of the present invention, the several radial grooves are circumferentially uniformly distributed around the rotor 001.

As shown in FIG.1, in one embodiment of the present invention, the first notch grooves 101 are arranged on the surface of the first dam area 011 at two ends of the rotor 001. The first notch grooves 101 together with the first dam area 011 form a radial bearing. The radial bearing forms a "pump-in" effect when the rotor rotates, driving gas to move along the edge of the grooves towards the middle area, and when it reaches the root of the grooves, it forms a local high-pressure flow, that is to say, forms an air film, which then supports the rotor 001.

In order to better guide the gas flow, in one embodiment of the present invention, as shown in FIG.1, the radial grooves are in a bent shape, and the bending direction of the radial grooves is opposite to the rotation direction of the rotor 001. In one embodiment of the present invention, the radial grooves use herringbone grooves, which includes two sides, the two sides are connected at one end and form an angle, the angle being preferably an obtuse angle greater than 90° and less than 180°. In one embodiment of the present invention, the two sides are straight-line-shaped. In another embodiment of the present invention, the two sides are curvilinear. It should be understood that in other embodiments of the present invention, the radial grooves may also use other shapes, such as curvilinear and so on. In order to better form a uniform air film, in the embodiments of the present invention, the radial grooves are preferably in a pattern symmetrical about the bearing.

In one embodiment of the present invention, the first notch grooves 101 are formed on the surface of the rotor after the rotor has been processed, so that during the processing of the rotor, it is necessary to ensure the dimensions and positional tolerances of areas of the radial notch groove bearing on two sides. In one embodiment of the present invention, the first notch grooves 101 are processed on the surface corresponding to the rotor 001 using laser engraving method. Compared to traditional foil bearing, it can effectively reduce the influence by the installation steps and tolerance during installation of the radial bearing. In one embodiment of the present invention, the depth of the first grooves 101 is 8 to 20 µm, and thus it will not have an impact on the precision of the rotor, thus ensuring a higher relative position precision than foil bearing.

In one embodiment of the present invention, the air-bearing further comprises a thrust bearing. Similarly, the thrust bearing also forms an air film by means of notch grooves to achieve the air-floating effect. FIG.2 illustrates a structural schematic diagram of assembly aggregate of an air-bearing and a thrust disc according to an embodiment of the present invention. As shown in FIG.2, the thrust bearing is formed on the surface of the thrust disc 002, and the thrust disc 002 is arranged at the end of the rotor 001. It should be understood that in the embodiments of the present invention, the thrust bearings may be arranged at one or two ends of the rotor.

FIG.3 illustrates a structural schematic diagram of a thrust disc according to an embodiment of the present invention. As shown in FIG.3, in one embodiment of the present invention, the thrust bearing comprises second notch grooves 102. The second notch grooves are arranged on the surface of two sides of the thrust disc 002, and the second notch grooves 102 on the surface of two sides of the thrust disc 002 are arranged in a mirror symmetrically arrangement.

As shown in FIG.3, in one embodiment of the present invention, the second notch grooves 102 are arranged on the surface of the second dam area 021 on the thrust disc 002. The second notch grooves 102 together with the second dam area 021 form the thrust bearing. The thrust bearing forms a "pump-in" effect when the rotor rotates, driving gas to move along the edge of the grooves towards the middle area, and when it reaches the root of the grooves, it forms a local high-pressure, and the gas film pressure of the thrust bearing can withstand axial force, reduce the axial runout of the rotor, and improve the stability of the rotor.

In order to better guide the gas flow, in one embodiment of the present invention, as shown in FIG.3, the second notch grooves 102 comprise a plurality of thrust grooves circumferentially uniformly distributed around the center of the thrust disk, the thrust grooves extend from the center of the thrust disk 002 toward its edge, and the thrust grooves are curvilinear grooves. In one embodiment of the present invention, the thrust grooves gradually tapers along the edge of the thrust disc 002 towards the center, and the second notch grooves 102 are formed to be spiral-shaped as a whole. It should be understood that in other embodiments of the present invention, the thrust grooves may also use other shapes.

In one embodiment of the present invention, the second notch grooves 102 are formed on the surface of the thrust disc after the thrust disc has been processed, so that during the processing of the rotor, it is necessary to ensure the dimensions and positional tolerances of its two surfaces. In one embodiment of the present invention, the second notch grooves 102 are processed on the surface corresponding to the thrust disc 002 using laser engraving method. Compared to traditional foil bearing, it can effectively reduce influence by the installation steps and tolerance during installation of the thrust bearing. In one embodiment of the present invention, the depth of the second notch grooves 102 is 8 to 20 µm, and thus it will not have an impact on the precision of the thrust disc, thus ensuring a higher relative position precision than foil bearing.

Based on the air-bearing as described above, the present invention also provides a centrifugal refrigeration compressor, which comprises the air-bearing as described above. Specifically, the centrifugal refrigeration compressor comprises a motor, an impeller, an air inlet, an outlet port, and a connecting pipe. The motor comprises a rotor, a stator, and a housing. The stator is fixed inside the housing, and the central axis of the rotor coincides with the central axis of the stator. The rotor uses the structure as described above, that is, it is provided with first grooves at two ends, and at the same time the thrust disc as described above is arranged on the side close to the air inlet, and as described above, a set of second notch grooves are arranged on the surface of two sides of the thrust disc to withstand axial thrust directed to the low-pressure side or the high-pressure side respectively.

A first chamber and a second chamber are respectively arranged at two ends of the interior of the housing. Wherein, the air inlet of the first chamber is connected to the air inlet of the compressor, which can also be understood that the air inlet is the air inlet of the first chamber, and a first impeller is arranged inside the first chamber, and the first impeller is fixed to the first end of the rotor. A connecting pipe is arranged between the first chamber and the second chamber, and the gas compressed by the first impeller flows out from the air outlet of the first chamber into the connecting pipe, and then flows into the second chamber through the air inlet of the second chamber. A second impeller is arranged in the second chamber, the second impeller is fixed to the second end of the rotor, and most of the gas compressed by the second impeller flows out from the air outlet of the second chamber, and the air outlet of the second chamber is connected to the outlet port of the compressor, which can also be understood that the outlet port is the air outlet of the second chamber. In the embodiment of the present invention, a first end cap and a second end cap are also arranged at the air outlets of the first chamber and the second chamber, respectively, and there is a gap between the first end cap and the second end cap on the one hand and the rotor on the other hand, and at the same time, there is a certain gap between the first end cap and the first impeller, through which the gas flowing through the first and second notch grooves can return to the main gas path, and there is also a certain gap between the second end cap and the second impeller, through which a part of the gas compressed by the second impeller can enter the first and second notch grooves under pressure and form an air film to achieve the air-floating effect. In one embodiment of the present invention, as described above, the first impeller and second impeller are designed in a back-to-back manner, so that the axial thrust of the first and second impellers are in opposite directions and offset each other, thereby effectively reducing the axial thrust received by the thrust bearing. In one embodiment of the present invention, the first impeller and the second impeller are fixed to the rotor by means of a first lock nut and a second lock nut, respectively.

In one embodiment of the present invention, a first pressure housing and a second pressure housing are respectively arranged at the outer sides of the two ends of the motor, a first sealing ring is arranged between the first pressure housing and the first impeller, and a second sealing ring is arranged between the second pressure housing and the second impeller, and the first and second sealing rings can significantly reduce the backflow effect from the outlet to the inlet of the first and second impellers, which can further improve the compressor efficiency.

In order to reduce the compression power consumption of the second impeller, in one embodiment of the present invention, an interstage air supplement hole is also arranged on the connecting pipe to introduce the output gas from the economizer to cool down the gas compressed by the first impeller, and thereby achieve the purpose of reducing the compression power consumption of the high-pressure impeller and improving the efficiency of the system.

In one embodiment of the present invention, the motor is a high-speed permanent magnet synchronous motor, and its bearings work as non-contact bearings, and thus can withstand higher rotational speeds than the usual ball bearings, and according to the Euler formula for compressors, Δh=U₂Cu₂-U₁Cu₁, it can be seen that, for the same work capacity of the compressor, the higher the rotational speed is, the smaller are the radial dimensions, and thus by using of permanent magnet synchronous motor, the power density of the compressor can be enhanced.

The notch groove type air-bearing provided by the present invention can be adapted to the requirements of smaller size and higher speed rotor systems, and at the same time reduce radial and thrust side air film gaps, thereby reducing the vibration amplitude, withstanding smaller tip clearances, and reducing the risk of impeller rubbing the shell. The notch groove type air-bearing is easy to process, only requiring laser or chemical etching on the rotor and the thrust disc, at the same time, the assembly process is simple, reducing the number of traditional individual parts and reducing the dimensional chain tolerance brought by the parts.

Although the various embodiments of the present invention have been described above, however, it should be understood that they are presented only as examples and not as limitations. It will be apparent to those skilled in the art that various combinations, variations and changes can be made thereto without departing from the spirit and scope of the present invention. Therefore, the width and scope of the present invention disclosed herein should not be limited by the exemplary embodiments disclosed above, but should only be defined based on the accompanying claims and their equivalents.

## Claims

1. An air-bearing, **characterized in that**, comprising:
two sets of first notch grooves, which are symmetrically arranged at two ends of a rotor, wherein each set of the first notch grooves comprise multiple radial grooves distributed circumferentially around the rotor, and the radial grooves are in a bending shape to form an air film to support the rotor when it rotates.

2. The air-bearing according to claim 1, **characterized in that**:
the radial grooves are uniformly distributed in the circumferential direction of the rotor; and/or
the radial grooves are in a bent shape.

3. The air-bearing according to claim 1, **characterized in that**, the bending direction of the radial grooves are opposite to the rotation direction of the rotor.

4. The air-bearing according to claim 1, **characterized in that**, the radial grooves are herringbone grooves.

5. The air-bearing according to claim 1, **characterized in that**, the depth of the radial grooves is 8 to 20 micrometers.

6. The air-bearing according to claim 1, **characterized in that**, the radial grooves are formed on the surface of the rotor by laser or chemical etching.

7. The air-bearing according to claim 1, **characterized in that**, further comprises dam areas, the dam areas are arranged at two ends of the rotor, and the first notch grooves are arranged on the surface of the dam areas.

8. The air-bearing according to claim 1, **characterized in that**, further comprises a thrust disc, the thrust disc is arranged at the end of the rotor, and one set of second notch grooves is mirror symmetrically provided respectively on two sides of the thrust disc to drive gas flow when the rotor rotates, forming a local high-pressure at the center of the thrust disc.

9. The air-bearing according to claim 1, **characterized in that**, each set of second notch grooves comprises a plurality of thrust grooves circumferentially uniformly distributed around the center of the thrust disk, the thrust grooves extend from the center of the thrust disk toward its edge, and the thrust grooves are curvilinear grooves.

10. The air-bearing according to claim 8, **characterized in that**, the depth of the thrust grooves is 8 to 20 micrometers.

11. The air-bearing according to claim 8, **characterized in that**, the first notch grooves and second notch grooves are formed on the surface of the thrust disc through laser or chemical etching.

12. A centrifugal refrigeration compressor, **characterized in that**, comprising the air-bearing according to any one of claims 1 to 11.
